# FASCICULE DE BREVET EUROPEEN

(11) **EP 3 764 517 B1**
(45) Date de publication et mention de la délivrance du brevet: **02.12.2026**
(21) Numéro de dépôt: 20183851.3
(22) Date de dépôt: 13.06.2019
(51) Int. Cl.: H02K 5/06, H02K 5/20, H02K 1/18, H02K 5/24

(54) **CARCASSE POUR MACHINE ÉLECTRIQUE TOURNANTE, STATOR ET PROCÉDÉ D'INSERTION D'UN STATOR DANS UNE TELLE CARCASSE**
GEHÄUSE FÜR EINE ELEKTRISCH UMLAUFENDE MASCHINE, STATOR UND VERFAHREN ZUM EINSETZEN EINES STATORS IN EIN SOLCHES GEHÄUSE
CARCASS FOR A ROTATING ELECTRIC MACHINE, STATOR AND METHOD FOR INSERTING A STATOR IN SUCH A CARCASS

(30) Priorité: 15.06.2018 FR 1855255
(43) Date de publication de la demande: 13.01.2021
(62) Numéro(s) de document de la (des) demande(s) initiale(s) en application de l'article 76 CBE: 19179884.2 / 3 582 372
(73) Titulaire: GE Energy Power Conversion Technology Ltd, Rugby, Warwickshire CV21 1BD (GB)
(72) Inventeur: VIOLIN, Frédéric, 54250 CHAMPIGNEULLES (FR); GOUZIN, Pierre Antoine, 54250 CHAMPIGNEULLES (FR); RAMACHANDRAN, Mahendran, 600032 CHENNAI (IN)
(74) Mandataire: Casalonga

(56) Documents cités:
- EP-A1- 2 793 361
- EP-A1- 3 070 818
- EP-A2- 1 489 726
- WO-A1-2020/069615
- FR-A1- 2 944 654
- KR-A- 20160 085 781
- US-A- 3 064 152
- US-A1- 2002 074 884
- US-A1- 2012 062 062

## Description

La présente invention concerne les machines électriques tournantes et se rapporte plus particulièrement à l'insertion d'un stator dans une carcasse d'une machine électrique tournante.

Le stator est généralement monté dans une ouverture circulaire pratiquée dans la carcasse et est assemblé dans la carcasse par frettage.

Le diamètre de l'ouverture circulaire est sensiblement le même que le plus grand diamètre extérieur du stator.

Afin d'insérer le stator dans la carcasse, la carcasse est chauffée de sorte que le diamètre de l'ouverture circulaire s'agrandisse.

Puis le stator est inséré par l'ouverture dans la carcasse.

Après le refroidissement de la carcasse, le stator est emprisonné dans la carcasse et reste immobile lorsque la machine électrique tournante développe un couple sur son arbre.

Cependant, la carcasse peut peser par exemple 1 tonne requérant une durée de chauffe importante, pouvant atteindre voire dépasser 8 heures.

Par ailleurs, il n'est pas possible d'équiper l'intérieur de la carcasse d'instruments tels que des sondes de vibration et de température, par exemple en fixant un boîtier auxiliaire avant que le stator soit inséré dans la carcasse, l'opération de chauffe détériorant ces éléments.

Les instruments sont donc montés dans la carcasse lorsque le stator est inséré dans cette dernière et la carcasse est refroidie.

Par conséquent, le montage de l'instrumentation dans la carcasse est plus compliqué à mettre en œuvre.

Enfin, l'opération d'insertion du stator dans la carcasse nécessite de manipuler la carcasse lorsqu'elle est chaude, rendant cette opération délicate à effectuer.

Le document US 2012/062062 A1 décrit une carcasse et un stator apparentés de l'art antérieur.

Il est donc proposé de pallier les inconvénients liés à l'insertion d'un stator de machine électrique tournante dans une carcasse selon l'état de la technique, notamment en supprimant la phase de chauffe de la carcasse, et de faciliter l'instrumentation de la carcasse.

Au vu de ce qui précède, il est proposé, selon un premier aspect, une carcasse pour machine électrique tournante comprenant une tôle de fond destinée à supporter un stator et des tôles latérales parallèles entre elles deux à deux.

La carcasse comporte une face ouverte opposée à la tôle de fond et des traverses s'étendant sur la tôle de fond et sur les tôles latérales de sorte que chaque traverse épouse la forme d'un plateau de serrage d'un stator.

Selon un premier mode de réalisation, chaque traverse comprend au moins une surface d'appui parallèle à la tôle de fond et destinée à supporter des oreilles incorporées dans le stator de manière à empêcher toute rotation du stator lorsque la machine électrique tournante développe un couple.

Selon un deuxième mode de réalisation, chaque traverse comprend au moins une surface d'appui parallèle à la tôle de fond et destinée à supporter des barreaux supports incorporés dans le stator de manière à empêcher une rotation du stator lorsque la machine électrique tournante développe un couple.

D'après l'invention, les tôles latérales comprennent des ouvertures de sorte que des moyens de fixation du stator dans la carcasse puissent être fixés sur les surfaces d'appui.

Il est proposé, selon un autre aspect, un stator pour machine électrique tournante.

Le stator comprend des barres supports disposées dans un plan passant par un axe de rotation de la machine électrique tournante, chaque barreau support étant destiné à reposer sur une surface d'appui d'une traverse différente incorporée dans une carcasse telle que définie précédemment.

Selon un premier mode de réalisation, le barreau support comprend au moins une oreille.

Il est proposé, selon un autre aspect, une machine électrique tournante comprenant un stator comprenant des plateaux de serrage et une carcasse telle que définie précédemment.

Selon un premier mode de réalisation, les plateaux de serrage reposent sur les traverses et le stator comprend des barres supports disposées dans un plan perpendiculaire à l'axe de rotation de la machine et les traverses comprennent des surfaces d'appui parallèles à la tôle de fond de sorte que des barreaux de support reposent sur les surfaces d'appui par l'intermédiaire de moyens de fixation et empêchent une rotation du stator lorsque la machine électrique tournante développe un couple.

Avantageusement, les moyens de fixation comportent des cales et des brides.

Selon un deuxième mode de réalisation, le stator comprend des barreaux supports disposés dans un plan perpendiculaire à l'axe de rotation de la machine et les traverses comprennent autant de surfaces d'appui parallèles à la tôle de fond que d'oreilles de sorte que les oreilles reposent sur les surfaces d'appui et empêchent une rotation du stator lorsque la machine électrique tournante développe un couple.

Selon un premier mode de réalisation, un secteur du plateau de serrage n'étant pas en contact avec une traverse est recouvert d'une tôle guillotine de manière à canaliser un flux d'air de refroidissement du stator de sorte qu'un flux d'air froid soit aspiré aux deux extrémités de la carcasse et le flux d'air réchauffé soit rejeté de la carcasse au niveau des tôles magnétique.

Selon un deuxième mode de réalisation lorsque le stator ne comporte pas d'oreilles, la tôle guillotine empêche en outre une rotation du stator, par frottement de la tôle sur le plateau, lorsque la machine électrique tournante développe un couple.

Il est proposé, selon encore un autre aspect, un procédé d'insertion d'un stator pour machine électrique tournante dans une carcasse.

On insère le stator dans la carcasse de sorte que les plateaux de serrage du stator reposent sur les traverses insérées dans la carcasse.

Selon un premier mode de mise en œuvre, on insère en outre le stator de sorte que des barreaux supports incorporés dans le stator soient en regard des surfaces d'appui des traverses.

De préférence, on fixe les barres supports sur les surfaces d'appui par l'intermédiaire de brides.

Avantageusement, on insère des pièces guillotines dans la carcasse de manière à empêcher une rotation du stator, par frottement de la tôle sur le plateau de serrage, lorsque la machine électrique tournante développe un couple et de manière à canalise le flux d'air de refroidissement du stator.

Selon un deuxième mode de mise en œuvre, on insère en outre le stator de sorte que des oreilles incorporées dans le stator soient en contact avec des surfaces d'appui des traverses.

De préférence, on insère des cales entre les oreilles et les surfaces d'appui de sorte que l'axe de révolution du stator soit confondu avec l'axe passant par les centres des ouvertures circulaires et de la carcasse.

Avantageusement, on insère des pièces guillotines dans la carcasse de manière à recouvrir la partie libre de chacun des plateaux de serrages et de manière à canaliser le flux d'air de refroidissement du stator.

D'autres caractéristiques et avantages de l'invention apparaîtront à la lecture de la description qui suit de modes de réalisation de l'invention, donnés uniquement à titre d'exemples non limitatifs et en référence aux dessins sur lesquels :
- la figure 1 illustre un premier mode de réalisation d'une carcasse pour machine électrique tournante ;
- la figure 2 illustre un premier mode de réalisation d'un stator;
- la figure 3 illustre un premier mode de réalisation d'une machine électrique tournante ;
- la figure 4 illustre un deuxième mode de réalisation d'une carcasse pour machine électrique tournante ;
- la figure 5 illustre un deuxième mode de réalisation d'un stator ;
- la figure 6 illustre un deuxième mode de réalisation d'une machine électrique tournante ;
- la figure 7 illustre un procédé d'insertion d'un stator dans une carcasse selon le premier mode de réalisation d'une machine électrique tournante ; et
- la figure 8 illustre un procédé d'insertion d'un stator dans une carcasse selon le deuxième mode de réalisation d'une machine électrique tournante.

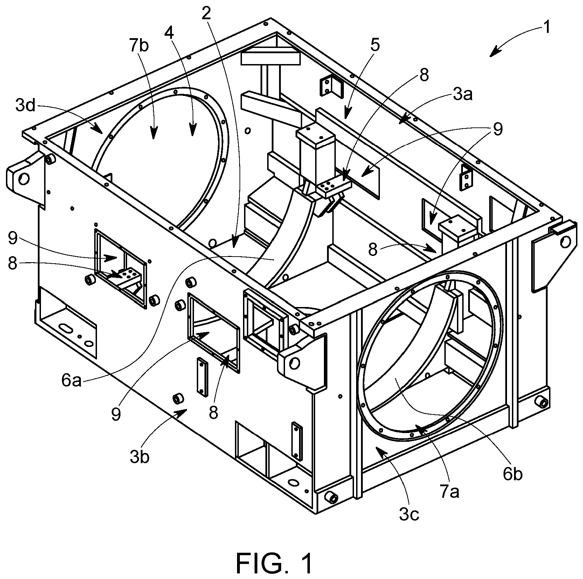

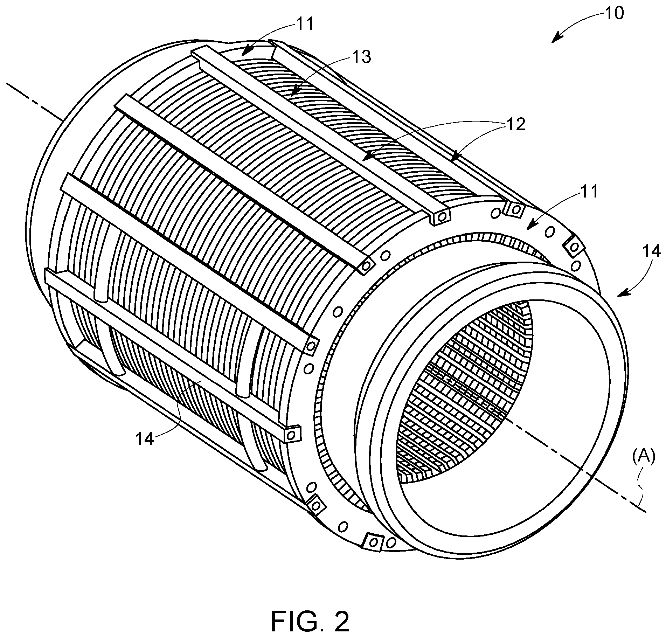

On se réfère aux figures 1, 2 et 3 qui illustrent un premier mode de réalisation d'une machine électrique tournante comprenant une carcasse 1 (figure 1) et un stator 10 (figure 2) monté dans la carcasse.

On se réfère an particulier à la figure 1 qui illustre un mode de réalisation de la carcasse 1.

La carcasse 1 comprend une tôle de fond 2, des tôles latérales 3a, 3b, 3c et 3d parallèles deux à deux et formant avec la tôle de fond 2 un caisson 4 destiné à recevoir un stator cylindrique et une face ouverte 5 opposée à la tôle de fond 2 par laquelle le stator est inséré dans le caisson 4.

La carcasse 1 est dotée intérieurement d'un berceau comprenant deux traverses 6a et 6b s'étendant chacune entre la tôle de fond 2 et une paire de tôles latérales 3a et 3b.

Ces traverses sont dotées chacune d'une surface d'appui concave qui épouse la forme d'un plateau de serrage du stator.

La carcasse 1 comprend le même nombre de traverses que de plateaux de serrage.

La carcasse 1 comprend des ouvertures circulaires 7a et 7b dimensionnées de manière à permettre l'insertion d'un rotor dans le stator.

Chaque traverse 6a et 6b comprend deux surfaces d'appui 8 parallèles à la tôle de fond 2 destinées à supporter des barres supports incorporées dans le stator de manière à empêcher toute rotation du stator lorsque la machine électrique tournante incorporant le stator développe un couple.

Les tôles latérales 3a et 3b comprennent des ouvertures latérales 9 disposées de telle sorte que des moyens de fixation du stator dans la carcasse puissent être fixés sur les surfaces d'appui 8.

On se réfère à la figure 2 qui illustre un mode de réalisation du stator 10 cylindrique apte à être inséré dans la carcasse 1.

Le stator 10 comprend des plateaux de serrage 11 reliés par des barreaux 12 de compression de manière à maintenir des tôles magnétiques 13 compactées et un axe de révolution (A) confondu avec un axe de rotation de la machine électrique incorporant le stator.

Le stator 10 comprend en outre deux barreaux supports 14 disposés dans un plan passant par l'axe de révolution (A).

Les barreaux supports 14 sont par exemple soudés sur les tôles magnétiques 13 et les plateaux de serrage 11.

Lors de l'insertion du stator 10 dans la carcasse 1, chaque barreau support 14 repose sur une surface d'appui 8 d'une traverse 6a et 6b différente par l'intermédiaire des moyens de fixation et des barreaux 12 de compression reposent sur les traverses 6a et 6b.

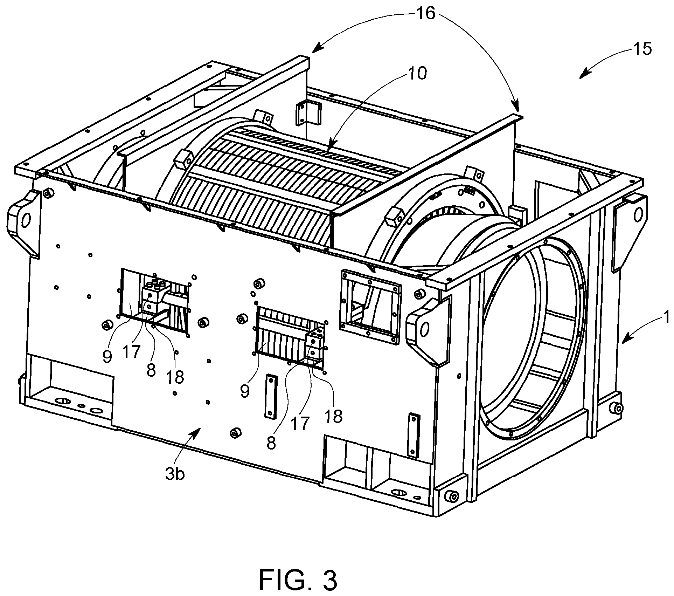

On se réfère à la figure 3 qui illustre un mode de réalisation de la machine électrique tournante 15 incorporant la carcasse 1, le stator 10, les tôles guillotines 16 et les moyens de fixation.

Le stator 10 est inséré dans la carcasse 1 de sorte que l'axe de révolution (A) du stator soit confondu avec un axe de révolution d'un cylindre dont les extrémités sont délimitées par les ouvertures circulaires 7a et 7b, les plateaux de serrage 11 reposent sur les traverses 6a et 6b et les barreaux supports 14 soient fixés sur les surfaces d'appui 8 par l'intermédiaire des moyens de fixation comportant, dans ce mode de réalisation, des brides 17 et des cales 18.

Afin de s'assurer que le stator 10 soit en contact avec la partie des traverses 6a et 6b s'étendant sur la tôle de fond 2, les brides 17 et les surfaces d'appui 8 sont disposées de sorte qu'un jeu sépare chaque bride 17 de la surface d'appui 8.

Chaque surface d'appui 8 est reliée à une partie d'un barreau de support 14 par l'intermédiaire d'une bride 17 et d'une cale 18.

L'épaisseur de la cale 18 est déterminée de manière à combler le jeu entre la bride 17 et la surface d'appui 8.

Le secteur de chaque plateau de serrage 11 qui n'est pas en contact avec une traverse 6a et 6b est recouvert d'une tôle guillotine 16 de manière à canaliser un flux d'air de refroidissement du stator 10. Le refroidissement est ainsi effectué par un flux d'air froid aspiré aux deux extrémités de la carcasse 1 et un flux d'air réchauffé rejeté de la carcasse 1 au niveau des tôles magnétiques 12.

Les tôles guillotines 16 sont fixées sur les traverses 6a et 6b.

En outre, les tôles guillotines 16 sont dimensionnées et montées sur le stator 10 de manière à empêcher toute rotation du stator 10 par frottement de chaque tôle guillotine 16 sur un plateau de serrage 11 lorsque la machine électrique tournante 15 développe un couple.

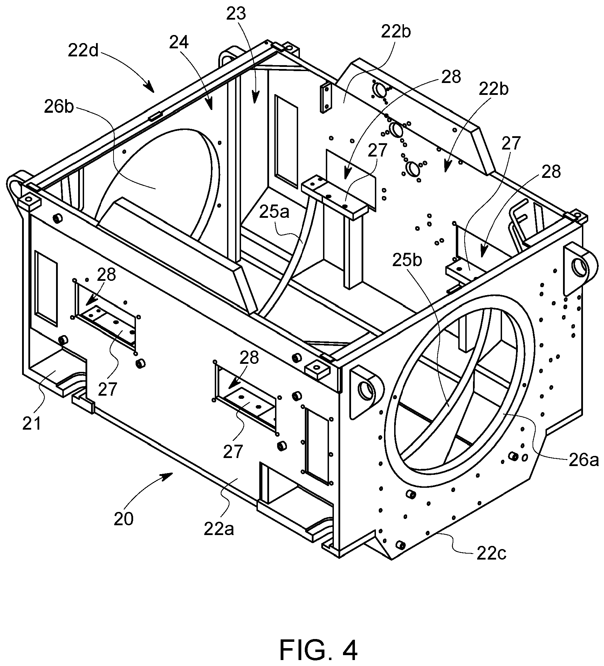

On se réfère aux figures 4, 5 et 6 qui illustrent un deuxième mode de réalisation d'une machine électrique tournante comprenant une carcasse 20, un stator 30, des tôles guillotines 37 et des moyens de fixation.

En référence à la figure 4, la carcasse 20 comprend une tôle de fond 21, des tôles latérales 22a, 22b, 22c et 22d parallèles deux à deux et formant avec la tôle de fond 21 un caisson 23 destiné à recevoir un stator cylindrique et une face ouverte 24 opposée à la tôle de fond 21 par laquelle le stator est inséré dans le caisson 23.

La carcasse 20 est dotée intérieurement d'un berceau comprenant deux traverses 25a et 25b s'étendant chacune entre la tôle de fond 21 et une paire de tôles latérales 22a et 22b.

Ces traverses sont dotées chacune d'une surface à appui concave qui épouse la forme d'un plateau de serrage du stator.

La carcasse 20 comprend le même nombre de traverses que de plateaux de serrage.

La carcasse 20 comprend des ouvertures circulaires 26a et 26b dimensionnées de manière à permettre l'insertion d'un rotor dans le stator.

Chaque traverse 25a et 25b comprend deux surfaces d'appui 27 parallèles à la tôle de fond 21 destinées à supporter des oreilles incorporées dans le stator de manière à empêcher toute rotation du stator lorsqu'une machine électrique tournante incorporant le stator développe un couple.

Les tôles latérales 22a et 22b comprennent des ouvertures latérales 28 disposées sur de telle sorte que des moyens de fixation du stator dans la carcasse puissent être fixés sur les surfaces d'appui 27.

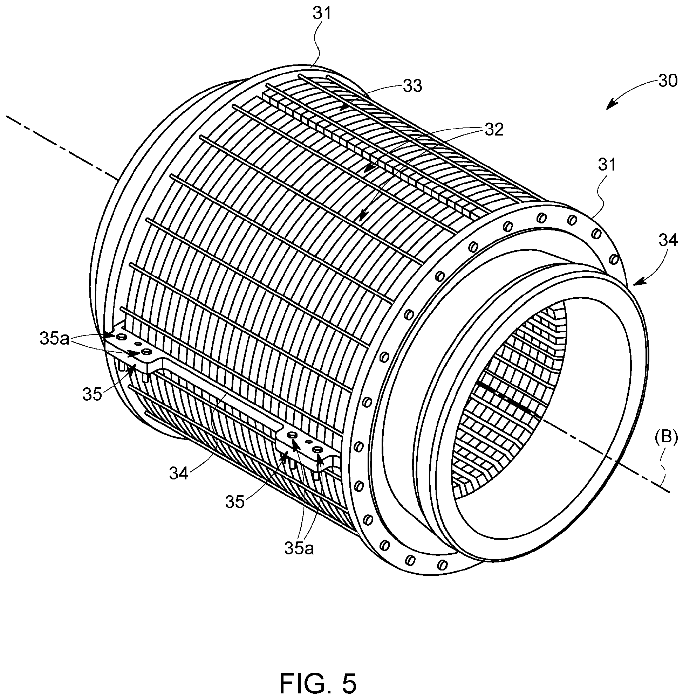

En référence à la figure 5, le stator 30 comprend des plateaux de serrage 31 reliés par des tirants 32 de compression de manière à maintenir des tôles magnétiques 33 compactées et un axe de révolution (B) confondu avec un axe de rotation de la machine électrique incorporant le stator.

Le stator 30 comprend en outre deux barreaux supports 34 disposés dans un plan passant par l'axe de révolution (B).

Les barreaux supports 34 sont encastrés dans les tôles magnétiques 33 et maintenus par les plateaux de serrage 31.

Chaque barreau support 34 comprend deux oreilles 35.

Selon d'autres modes de réalisation, chaque barreau peut comprendre une ou plusieurs oreilles.

Les oreilles 35 sont disposées de sorte que lorsque le stator 30 est inséré dans la carcasse 20, chaque oreille 35 repose par l'intermédiaire de moyens de fixation sur une surface d'appui 27 d'une traverse 25a et 25b différente.

Les oreilles 35 ont dimensionnées pour empêcher toute rotation du stator 30 lorsque la machine électrique tournante développe un couple.

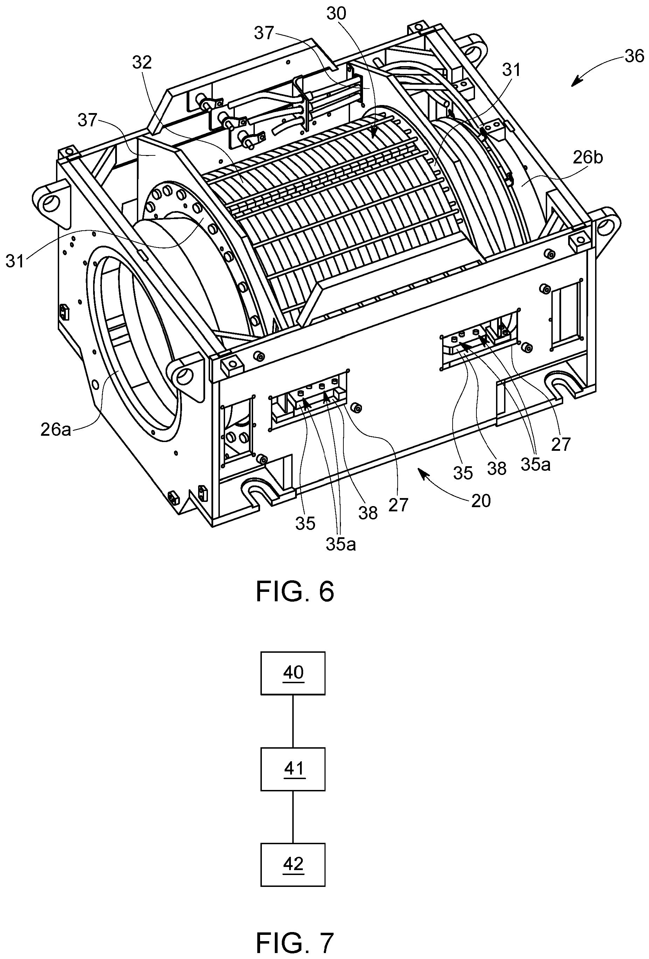

On se réfère à la figure 6 qui illustre un mode de réalisation de la machine électrique tournante 36 incorporant la carcasse 23, le stator 30, les tôles guillotines 37 et les moyens de fixation.

Le stator 30 est inséré dans la carcasse 20 de sorte que l'axe de révolution (B) du stator soit confondu avec un axe de révolution d'un cylindre dont les extrémités sont délimitées par les ouvertures circulaires 26a et 26b et les oreilles 35 soient fixées sur les surfaces d'appui 27 par l'intermédiaire des moyens de fixation comportant dans ce mode de réalisation des cales 38 et des vis 35a.

Les oreilles 35 et les surfaces d'appui 27 sont en outre configurées de sorte que les vis 35a fixent les oreilles 35 sur les surfaces 27.

L'épaisseur de la cale 38 est déterminée de sorte que l'axe de révolution (B) du stator 30 soit confondu avec l'axe passant par les centres des ouvertures circulaires 26a et 26b de la carcasse 20.

Dans ce mode de réalisation, le stator 30 repose sur les traverses 25a et 25b seulement lors de l'insertion du stator 30 dans la carcasse 20.

Après l'insertion du stator 30 dans la carcasse 20, le stator repose sur la carcasse par l'intermédiaire des oreilles 35.

Le secteur de chaque plateau de serrage 31 qui n'est pas en contact avec une traverse 25a et 25b est recouvert d'une tôle guillotine 37 de manière à canaliser un flux d'air de refroidissement du stator 30 de sorte qu'un flux d'air froid soit aspiré aux deux extrémités de la carcasse 20 et le flux d'air réchauffé soit rejeté de la carcasse 20 au niveau des tôles magnétique 32.

Les tôles guillotines 37 sont fixées sur les traverses 25a et 25b.

On se réfère à présent à la figure 7 qui illustre un exemple de procédé d'insertion d'un stator dans une carcasse selon le premier mode de réalisation d'une machine électrique tournante.

Lors d'une étape 40, le stator 10 est inséré dans la carcasse 1 de sorte que les plateaux de serrage 11 du stator reposent sur les traverses 6a et 6b insérées dans la carcasse.

Les barreaux supports 14 sont disposés de manière à être en regard des surfaces d'appui 8 des traverses.

Puis, lors d'une étape 41, les barreaux supports 14 sont fixés sur les surfaces d'appui 8 par l'intermédiaire de brides 17.

Dans une étape 42, des tôles guillotines 16 sont mises en place de manière à recouvrir la partie libre de chacun des plateaux de serrages 11, de manière à canaliser le flux d'air de refroidissement du stator et de manière à empêcher toute rotation du stator 10 par frottement de chaque tôle guillotine 16 sur un plateau de serrage 11 lorsque la machine électrique tournante 15 développe un couple.

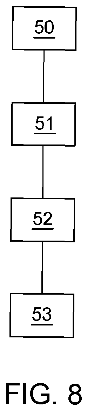

On se réfère à présent à la figure 8 qui illustre un exemple de procédé d'insertion d'un stator dans une carcasse selon le deuxième mode de réalisation d'une machine électrique tournante.

Lors d'une étape 50, le stator 30 est inséré dans la carcasse 20 de sorte que les plateaux de serrage 31 du stator reposent sur les traverses 25a et 25b insérées dans la carcasse 20.

Dans une étape 51, les oreilles 35 sont disposées de manière à reposer sur les surfaces d'appui 28 des traverses.

Les plateaux de serrage 31 du stator ne reposent plus sur les traverses.

Dans une étape 52, des cales 38 sont insérées entre les oreilles 35 et les surfaces d'appui de sorte que l'axe de révolution (B) du stator 30 soit confondu avec l'axe passant par les centres des ouvertures circulaires 26a et 26b de la carcasse 20.

Dans une étape 53, les tôles guillotines 37 sont mises en place de manière à recouvrir la partie libre de chacun des plateaux de serrages et de manière à canaliser le flux d'air de refroidissement du stator 30.

Avantageusement, la carcasse peut être équipée d'instruments avant l'insertion du stator facilitant ainsi les opérations de câblage, fixation de boîtiers auxiliaires, insertion de sondes.

De plus, la carcasse ne nécessite plus d'être chauffée et refroidie. Par conséquent, la durée de fabrication de la machine électrique tournante est considérablement réduite.

## Revendications

1. Carcasse pour machine électrique tournante comprenant une tôle de fond (21) destinée à supporter un stator (30) et des tôles latérales (22a, 22b, 22c, 22d) parallèles deux à deux, la carcasse comportant une face ouverte (24) opposée à la tôle de fond et des traverses (25a, 25b) s'étendant sur la tôle de fond et sur les tôles latérales de sorte que chaque traverse est apte à épouser la forme d'un plateau de serrage d'un stator (30), chaque traverse (25a, 25b) comprenant au moins une surface d'appui (27) parallèle à la tôle de fond et destinée à supporter des oreilles (35) incorporées dans le stator (30) de manière à empêcher une rotation du stator lorsque la machine électrique tournante développe un couple, **caractérisée en ce que** les tôles latérales (22a, 22b) comprennent des ouvertures (28) de sorte que des moyens de fixation du stator dans la carcasse puissent être fixés sur les surfaces d'appui.

2. Stator pour machine électrique tournante, et carcasse selon la revendication 1, **caractérisés en ce que** le stator comprend des barreaux supports (34) disposées dans un plan passant par un axe de révolution du stator, chaque barre support reposant sur une surface d'appui (27) d'une traverse différente.

3. Stator selon la revendication 2 et carcasse selon la revendication 1, dans lequel le barreau support (34) comprend au moins une oreille (35).

4. Machine électrique tournante comprenant un stator (30) comprenant des plateaux de serrage et une carcasse selon la revendication 1, la carcasse (20) comprenant une tôle de fond (21) comprenant des traverses dotées chacune d'une surface d'appui concave épousant la forme des plateaux de serrage, la face (24) opposée à la tôle de fond étant ouverte, **caractérisée en ce que** le stator comprend des barreaux supports disposés dans un plan perpendiculaire à l'axe de rotation de la machine et les traverses (25a, 25b) comprennent autant de surfaces d'appui (27) parallèles à la tôle de fond que d'oreilles (35) de sorte que les oreilles reposent sur les surfaces d'appui et empêchent une rotation du stator lorsque la machine électrique tournante développe un couple.

5. Machine électrique tournante selon la revendication 4, dans laquelle un secteur du plateau de serrage (31) n'étant pas en contact avec une traverse est recouvert d'une tôle guillotine (37) de manière à canaliser un flux d'air de refroidissement du stator de sorte qu'un flux d'air froid soit aspiré aux deux extrémités de la carcasse et le flux d'air réchauffé soit rejeté de la carcasse au niveau des tôles magnétique.

6. Procédé d'insertion d'un stator pour machine électrique tournante dans une carcasse (21) selon la revendication 1, dans lequel on insère le stator (30) dans la carcasse de sorte que les plateaux de serrage (31) du stator reposent sur les traverses insérées dans la carcasse, **caractérisé en ce qu'**on insère en outre le stator (30) de sorte que des oreilles (35) incorporées dans le stator soient en contact avec des surfaces d'appui (27) des traverses

7. Procédé d'insertion selon la revendication 6, dans lequel on insère des cales (38) entre les oreilles et les surfaces d'appui de sorte que l'axe de révolution (B) du stator (30) soit confondu avec l'axe passant par les centres des ouvertures circulaires (26a) et (26b) de la carcasse (20).

8. Procédé selon la revendication 7, dans lequel on insère des pièces guillotines (37) dans la carcasse de manière à recouvrir la partie libre de chacun des plateaux de serrages (31) et de manière à canaliser le flux d'air de refroidissement du stator.

## Patentansprüche

1. Gehäuse für eine drehende elektrische Maschine, umfassend ein Bodenblech (21), das dazu bestimmt ist, einen Stator (30) und paarweise parallel zueinander liegende Seitenbleche (22a, 22b, 22c, 22d) zu tragen, wobei das Gehäuse eine dem Bodenblech gegenüberliegende offene Seite (24) und Querträger (25a, 25b) enthält, die sich über das Bodenblech und die Seitenbleche erstrecken, so dass jeder Querträger in der Lage ist, die Form einer Klemmplatte eines Stators (30) anzunehmen, wobei jeder Querträger (25a, 25b) mindestens eine Auflagefläche (27) umfasst, die parallel zum Bodenblech liegt und dazu bestimmt ist, in den Stator (30) eingearbeitete Laschen (35) zu tragen, um eine Drehung des Stators zu verhindern, wenn die drehende elektrische Maschine ein Drehmoment entwickelt, **dadurch gekennzeichnet, dass** die Seitenbleche (22a, 22b) Öffnungen (28) umfassen, so dass Mittel zur Befestigung des Stators im Gehäuse an den Auflageflächen befestigt werden können.

2. Stator für eine drehende elektrische Maschine und Gehäuse nach Anspruch 1, **dadurch gekennzeichnet, dass** der Stator Stützstäbe (34) umfasst, die in einer Ebene angeordnet sind, die durch eine Drehachse des Stators verläuft, wobei jeder Stützstab auf einer Auflagefläche (27) eines anderen Querträgers aufliegt.

3. Stator nach Anspruch 2 und Gehäuse nach Anspruch 1, wobei der Stützstab (34) mindestens eine Lasche (35) umfasst.

4. Drehende elektrische Maschine, umfassend einen Stator (30), der Klemmplatten und ein Gehäuse nach Anspruch 1 umfasst, wobei das Gehäuse (20) ein Bodenblech (21) umfasst, das Querträger umfasst, die jeweils eine konkave Auflagefläche aufweisen, die sich an die Form der Klemmplatten anpasst, wobei die dem Bodenblech gegenüberliegende Seite (24) offen ist, **dadurch gekennzeichnet, dass** der Stator Stützstäbe umfasst, die in einer zur Drehachse der Maschine senkrechten Ebene angeordnet sind, und die Querträger (25a, 25b) so viele parallel zum Bodenblech liegende Auflageflächen (27) wie Laschen (35) umfassen, so dass die Laschen auf den Auflageflächen aufliegen und eine Drehung des Stators verhindern, wenn die drehende elektrische Maschine ein Drehmoment entwickelt.

5. Drehende elektrische Maschine nach Anspruch 4, wobei ein Sektor der Klemmplatte (31), der keinen Kontakt zu einem Querträger hat, mit einem Stauschieberblech (37) abgedeckt ist, so dass ein Kühlluftstrom des Stators so geleitet wird, dass ein kalter Luftstrom an beiden Enden des Gehäuses angesaugt wird und der erwärmte Luftstrom im Bereich der Magnetbleche aus dem Gehäuse ausgestoßen wird.

6. Verfahren zum Einsetzen eines Stators für eine drehende elektrische Maschine in ein Gehäuse (21) nach Anspruch 1, wobei der Stator (30) so in das Gehäuse eingesetzt wird, dass die Klemmplatten (31) des Stators auf den in das Gehäuse eingesetzten Querträgern aufliegen, **dadurch gekennzeichnet, dass** ferner der Stator (30) so eingesetzt wird, dass in den Stator eingearbeitete Laschen (35) mit Auflageflächen (27) der Querträger in Kontakt stehen.

7. Einsetzverfahren nach Anspruch 6, wobei Keile (38) zwischen die Laschen und die Auflageflächen eingesetzt werden, so dass die Drehachse (B) des Stators (30) mit der Achse zusammenfällt, die durch die Mittelpunkte der kreisförmigen Öffnungen (26a) und (26b) des Gehäuses (20) verläuft.

8. Verfahren nach Anspruch 7, wobei Stauschieberteile (37) so in das Gehäuse eingesetzt werden, dass der freie Teil jeder der Klemmplatten (31) abgedeckt wird und der Kühlluftstrom des Stators geleitet wird.

## Claims

1. A frame for a rotating electric machine comprising a bottom sheet metal (21) intended to support a stator (30) and side sheet metals (22a, 22b, 22c, 22d) parallel in pairs, the frame comprising an open face (24) opposite to the bottom sheet metal and cross-members (25a, 25b) extending on the bottom sheet metal and on the side sheet metals so that each cross-member is capable of conforming to the shape of a clamping plate of a stator (30), each cross-member (25a, 25b) comprising at least one bearing surface (27) parallel to the bottom sheet metal and intended to support lugs (35) incorporated in the stator (30) so as to prevent a rotation of the stator when the rotating electric machine creates a torque, **characterised in that** the side sheet metals (22a, 22b) comprise openings (28) so that means for fastening the stator in the frame could be fastened on the bearing surfaces.

2. A stator for a rotating electric machine, and the frame according to claim 1, **characterised in that** the stator comprises support bars (34) disposed in a plane passing through an axis of revolution of the stator, each support bar resting on a bearing surface (27) of a different cross-member.

3. The stator according to claim 2 and the frame according to claim 1, wherein the support bar (34) comprises at least one lug (35).

4. A rotating electric machine comprising a stator (30) comprising clamping plates and a frame according to claim 1, the frame (20) comprising a bottom sheet metal (21) comprising cross-members each provided with a concave bearing surface conforming to the shape of the clamping plates, the face (24) opposite to the bottom sheet metal being open, **characterised in that** the stator comprises supporting bars disposed in a plane perpendicular to the axis of rotation of the machine and the cross-members (25a, 25b) comprise as many bearing surfaces (27) parallel to the bottom sheet metal as lugs (35) so that the lugs rest on the bearing surfaces and prevent rotation of the stator when the rotating electric machine develops a torque.

5. The rotating electric machine according to claim 4, wherein a sector of the clamping plate (31) not in contact with a cross-member is covered with a baffle sheet metal (37) so as to channel a cooling air flux of the stator so that a cold air flux is sucked at both ends of the frame and the air flux heated is rejected from the frame at the magnetic sheet metals.

6. A method for inserting a stator for a rotating electric machine into a frame (21) according to claim 1, wherein the stator (30) is inserted into the frame so that the clamping plates (31) of the stator rest on the cross-members inserted into the frame, **characterised in that** the stator (30) is further inserted so that lugs (35) incorporated into the stator are in contact with bearing surfaces (27) of the cross-members

7. The insertion method according to claim 6, wherein shims (38) are inserted between the lugs and the bearing surfaces so that the axis of revolution (B) of the stator (30) is coincident with the axis passing through the centres of the circular openings (26a) and (26b) of the frame (20).

8. The method according to claim 7, wherein baffle parts (37) are inserted into the frame so as to cover the free portion of each of the clamping plates (31) and so as to channel the cooling air flux of the stator.
